# EUROPÄISCHE PATENTSCHRIFT

(11) **EP 3 138 708 B1**
(45) Veröffentlichungstag und Bekanntmachung des Hinweises auf die Patenterteilung: **23.05.2018**
(21) Anmeldenummer: 16185406.2
(22) Anmeldetag: 23.08.2016
(51) Int. Cl.: B60G 21/055, B21D 53/88, B21D 9/00, C21D 9/08

(54) **DREHSTAB-STABILISATOR UND VERFAHREN ZU DESSEN HERSTELLUNG**
STABILIZER BAR AND PROCESS OF PRODUCING THE SAME
BARRE STABILISATRICE ET PROCEDE DE SA FABRICATION

(30) Priorität: 04.09.2015 DE 102015114897
(43) Veröffentlichungstag der Anmeldung: 08.03.2017
(73) Patentinhaber: Muhr und Bender KG, 57439 Attendorn (DE)
(72) Erfinder: Mücher, Mario, 57439 Attendorn (DE); Macedo, Sergio, 99631 Weißensee (DE); Ditzer, Boris, 57399 Würdinghausen (DE)
(74) Vertreter: Neumann Müller Oberwalleney & Partner Patentanwälte

(56) Entgegenhaltungen:
- JP-A- H07 237 428
- KR-A- 20140 048 429
- US-A1- 2007 216 126
- US-A1- 2014 060 709

## Beschreibung

Die Erfindung betrifft einen Drehstab-Stabilisator für ein Fahrwerk eines Kraftfahrzeugs sowie ein Verfahren zur Herstellung eines solchen Stabilisators. Ein Drehstab-Stabilisator ist ein Federelement, das einem Wanken des Kraftfahrzeugs entgegenwirkt und so zur Verbesserung der Fahrdynamik beziehungsweise der Straßenlage des Kraftfahrzeugs beiträgt. Die Enden des Stabilisators werden mit jeweils einer Radaufhängung einer Fahrzeugachse verbunden. Zwischen den beiden Enden wird der Stabilisator an der Fahrzeugkarosserie befestigt.

Aus der US 2007/0216126 A1 ist ein Verfahren zur Herstellung eines rohrförmigen Stabilisators bekannt. Es wird ein Rohrkörper bereitgestellt, der erhitzt und anschließend abgeschreckt wird. Im abgeschreckten Zustand hat der Rohrkörper eine Festigkeit von etwa 1400 MPa. Anschließend wird der Rohrkörper zur gewünschten Form umgeformt, wobei der umgeformte Stabilisator einen im Wesentlichen länglichen Körper mit zwei Stabilisatorarmen mit ersten und zweiten Enden aufweist. Die Enden des Stabilisators sind abgeflacht und gelocht, so dass der Stabilisator mit der Aufhängung eines Kraftfahrzeugs verbunden werden kann.

Aus der DE 11 2011 100 846 T5 sind ein massiver Stabilisator und ein Herstellungsverfahren des massiven Stabilisators bekannt. Das Herstellungsverfahren umfasst einen Formungsschritt, einen Härtungsschritt und einen Temper-Schritt. Beim Härtungsschritt werden die augenförmigen Endabschnitte eingespannt und Strom zwischen den augenförmigen Endabschnitten angelegt, um das Stahlmaterial auf eine Härungstemperatur von 970°C zu erwärmen. Danach wird das Stahlmaterial schnell abgekühlt und getempert. Nach dem Tempern beträgt die Härte in einem radialen Mittenabschnitt des massiven Stabilisators 400 HV. Die Zugfestigkeit beträgt 1.200 MPa oder mehr.

Aus der US 2011/0290382 A1 ist ein Hochfestigkeitsstahl für einen Stabilisator bekannt, der 0,07% bis 0,2% C und 1% bis 3% Mn sowie weitere Legierungselemente enthält. Der Stabilisator hat einen Torsionsabschnitt und ein Paar von Armen mit Anschlusselementen an den Enden. Aus der US 2014/0060709 A1 ist ein ähnlicher Stabilisator bekannt.

Aus der DE 197 58 292 A1 ist ein Rohrstabilisator bekannt, bei dem die einzelnen Stabilisatorabschnitte so dimensioniert sind, dass in den wesentlichen Stabilisatorabschnitten eine quasigleiche Schwingfestigkeit gegeben ist. Es werden Grundfestigkeitswerte des Materials von beispielsweise 1.500 MPa bis 1.800 MPa angegeben. Durch Vergüten wird die Zugfestigkeit der Oberflächenrandschicht im Vergleich zur Zugfestigkeit eines entkohlten Materials erhöht. Die Wandstärke ist im Bereich des U-Rückens geringer als im gebogenen Übergangsbereich zu den Schenkeln.

Aus der DE 10 2009 011 818 A1 ist ein Verfahren zur Herstellung eines Stabilisators mit zwei Stabilisatorlagern bekannt. Hierfür ist vorgesehene, dass der Stabilisator abschnittsweise erwärmt wird, dann mit dem Stabilisatorlager in Flächenkontakt gebracht und verpresst wird.

Aus der DE 10 2013 101 276 A1 ist ein Verfahren zur Herstellung eines Kraftfahrzeugstabilisators bekannt. Hierfür ist vorgesehen, dass Bandmaterial aus einer hochmanganhaltigen Stahllegierung zu einem Rohrprofil umgeformt wird und anschließend mit Hochfrequenzschweißen zu einem Endlosrohr geschweißt wird. Das so hergestellte Rohr wird dann über einen Dorn nachgezogen, wobei je nach Umformgrad des Nachziehens gegebenenfalls ein Zwischenglühen stattfinden kann. Als Vorteil wird angegeben, dass der so hergestellte Stabilisator keiner Vergütungsbehandlung bedarf.

Die Endabschnitte von Stabilisatoren können aufgrund von Querschnittsveränderungen geometrisch und aufgrund von Umform- und Abkühlprozessen auch materialstrukturell eine verminderte Belastbarkeit haben. Die Wandstärken der Endabschnitte von Stabilisatoren sind üblicherweise entsprechend den von den radführenden Komponenten eingeleiteten Kräften beziehungsweise Belastungen ausgeführt.

Bei hohen Belastungen und geringer Materialstärke der Stabilisatorenden kann es gegebenenfalls nötig sein, zusätzliche Verstärkungen einzubringen, was der Forderung nach Leichtbau entgegenwirkt. Ferner kann es unter Umständen zu Undichtigkeiten an den Stabilisatorenden kommen, die im schlimmsten Fall zum Bauteilversagen führen können.

Hiervon ausgehend liegt der vorliegenden Erfindung die Aufgabe zugrunde, einen Stabilisator vorzuschlagen, der bei möglichst geringem Materialeinsatz hoch beanspruchbar ist und der bei guten Dichtigkeitseigenschaften einfach herstellbar ist. Die Aufgabe besteht ferner darin, ein entsprechendes Herstellungsverfahren vorzuschlagen, das die Herstellung eines hochbelastbaren und möglichst leichten Stabilisators, dessen Enden gute Dichtigkeitseigenschaften haben, prozesssicher ermöglicht.

Eine Lösung besteht in einem gehärteten Drehstab-Stabilisator für ein Fahrwerk eines Kraftfahrzeugs, hergestellt aus einem Rohrkörper, umfassend: einen Torsionsfederabschnitt und zwei hiervon abgebogene Schenkel; wobei die Schenkel jeweils einen umgeformten Endabschnitt mit einer Durchgangsöffnung und einen rohrförmigen Abschnitt aufweisen; wobei der Torsionsfederabschnitt ein gehärtetes Gefüge mit einer Festigkeit von mindestens 1000 MPa aufweist; und wobei die umgeformten Endabschnitte ein gehärtetes Gefüge mit einer Festigkeit von mindestens 800 MPa aufweisen. Es ist insbesondere vorgesehen, dass die Schenkel im rohrförmigen Abschnitt jeweils einen Teilbereich mit einer Festigkeit aufweisen, die kleiner ist als die Festigkeit des Torsionsfederabschnitts.

Ein Vorteil besteht darin, dass der Drehstab-Stabilisator aufgrund der hohen Festigkeit der Endabschnitte auch hohen Belastungen standhalten kann und eine lange Lebensdauer aufweist. Durch die hohe Festigkeit kann die Wandstärke der Endabschnitte gegebenenfalls reduziert werden, so dass bei gleichbleibender Belastbarkeit das Gewicht des Stabilisators reduziert werden kann. Die umgeformten und gehärteten Stabilisatorenden können beispielsweise einfach und prozesssicher durch Presshärten hergestellt werden.

Der Stabilisator ist gehärtet beziehungsweise vergütet, womit im Rahmen der vorliegenden Offenbarung gemeint ist, dass der Stabilisator eine höhere Härte aufweist als das Ausgangsmaterial. Hierfür wird das Ausgangsmaterial erwärmt und anschließend abgeschreckt, so dass ein gegenüber dem Ausgangsgefüge härteres Gefüge entsteht. Vorzugsweise ist der Stabilisator aus einem härtbaren Stahlwerkstoff hergestellt, der zum Härten auf Austenitisierungstemperatur erhitzt und anschließend schnell abgekühlt wird. Durch das schnelle Abkühlen erfolgt eine zumindest teilweise, vorzugsweise vollständige Umwandlung des Gefüges zu Martensit. Dazu sind Stähle geeignet, bei denen im Zeit-Temperatur-Umwandlungsschaubild die Umwandlungen in der Perlit- und Bainitstufe zu längeren Zeiten verschoben sind, so dass die obere kritische Abkühlungsgeschwindigkeit verhältnismäßig niedrig ist und auch im Kern des Werkstücks noch erreicht werden kann. Vorzugsweise hat der Stahlwerkstoff einen Kohlenstoffgehalt von weniger als 0,5 Gewichtsprozent und/oder einem Mangangehalt von 0,5 bis 3,0 Gewichtsprozent.

Nach dem Härten kann der Stabilisator angelassen werden. Durch das Anlassen nimmt die Festigkeit des zunächst spröden Martensits ab, die Zähigkeit aber zu. Insgesamt können durch geeignete Anlasstemperaturen die gewünschten Eigenschaftskombinationen des Bauteils erreicht werden. Die Kombination von Härten und anschließendem Anlassen des Bauteils wird auch als Vergüten bezeichnet.

Die Härte und die Festigkeit des Stabilisators bedingen einander. Entsprechend der gewünschten Festigkeit kann der Torsionsfederabschnitt nach einer möglichen Ausgestaltung eine Härte von mindestens 310 HV, vorzugsweise mindestens 410 HV, insbesondere von mindestens 500 HV haben. Die umgeformten Endbereiche können eine Härte von mindestens 250 HV, vorzugsweise mindestens 310HV, insbesondere von mindestens 400 HV aufweisen.

Der Stabilisator kann aus einem Rohrkörper als Ausgangsmaterial hergestellt werden, von dem die Schenkel abgebogen werden. Die umgeformten Endabschnitte der Schenkel können durch Warmumformen hergestellt werden. Hierfür werden die umzuformenden Endabschnitte zunächst erwärmt, so dass die Härte in diesen Abschnitten gegenüber der Härte des Ausgangsmaterials wieder reduziert wird, und anschließend umgeformt. Es ist insbesondere vorgesehen, dass die umgeformten Endabschnitte jeweils einen flachen Endbereich aufweisen, der gelocht ist, und einen hieran anschließenden Übergangsbereich. Die durch die Lochung entstehenden Durchgangsöffnungen dienen zum Verbinden des Stabilisators mit einem Anschlussbauteil, beispielsweise einer Fahrwerkskomponente des Kraftfahrzeugs. Vorzugsweise sind die Endabschnitte beziehungsweise die Endbereiche flüssigkeitsdicht und/oder gasdicht verschlossen. Dies kann im Wege der Umformoperation zur Herstellung der umgeformten Endabschnitte erfolgen. Insbesondere ist vorgesehen, dass die Herstellung derart erfolgt, dass die Stabilisatorenden bis mindestens 2 bar Innendruck gasdicht sind und/oder der Innendruck nach 5 Minuten noch mindestens das 0,75-fache des maximal aufgebrachten Drucks beträgt. Dabei trägt das gehärtete Gefüge der Endbereiche neben dem Umformprozess zum Erreichen dieser Dichtigkeitswerte bei.

Der Übergangsbereich zwischen dem abgeflachten Endbereich und dem Rohrabschnitt des Schenkels hat einen variablen Querschnitt über der Länge des Übergangsbereichs. Mit anderen Worten bildet der Übergangsbereich einen querschnittsverändernden Übergang zwischen dem flachen Endbereich und dem rohrförmigen Schenkelabschnitt. Der Übergangsbereich hat eine Festigkeit von vorzugsweise mindestens 800 MPa, insbesondere von mindestens 1000 MPa, je nach technischen Anforderungen auch mehr als 1200 MPa. Nach einer günstigen Ausgestaltung hat der Übergangsbereich zumindest annähernd dieselbe Festigkeit und Härte wie der gelochte Endbereich des Schenkels.

An den Übergangsbereich schließt sich der rohrförmige Schenkelabschnitt an, der einen Teilbereich mit geringer Festigkeit beziehungsweise Härte aufweisen kann. Insbesondere kann die Festigkeit beziehungsweise Härte dieses Teilbereichs geringer sein als die Festigkeit beziehungsweise Härte des Torsionsfederabschnitts und/oder als die Festigkeit beziehungsweise Härte des Endbereichs, wobei die Festigkeit und Härte des Torsionsfederabschnitts insbesondere der Grundfestigkeit und Grundhärte des vergüteten Stabilisators entsprechen kann. Beispielsweise kann die Festigkeit in diesem Teilbereich des rohrförmigen Schenkelabschnitts kleiner als das 0,7-fache der Festigkeit des Torsionsfederabschnitts und/oder des Endabschnitts sein. Alternativ oder in Ergänzung kann die Festigkeit des genannten Teilbereichs größer als das 0,5-fache der Festigkeit des Torsionsfederabschnitts und/oder des Endabschnitts sein. Die Härte des Materials steht mit der Festigkeit in Zusammenhang, so dass die genannten Werte auch entsprechend für die Härte gelten können. Damit der Teilbereich mit verminderter Festigkeit keine negative Auswirkung auf die Gesamtfestigkeit und Lebensdauer des Stabilisators hat, ist insbesondere vorgesehen, dass dieser vom Übergangsbereich einen Abstand aufweist, der vorzugsweise mindestens dem halben Durchmesser des rohrförmigen Schenkelabschnitts entspricht.

Nach einer möglichen Ausgestaltung kann der Drehstab-Stabilisator eine variable Wanddicke über der Länge aufweisen. Dabei kann die Wandstärke entsprechend den technischen Bedürfnissen eingestellt werden, das heißt an höher belasteten Stellen kann eine größere Wandstärke vorgesehen werden beziehungsweise an Stellen, in denen eine größere Elastizität gewünscht ist, kann die Wandstärke entsprechend geringer ausgestaltet sein. Insbesondere ist vorgesehen, dass eine Wanddicke zumindest der Endbereiche kleiner ist als eine maximale Wanddicke des Drehstab-Stabilisators. Beispielsweise kann die Wanddicke der Endbereiche mindestens 20 % kleiner sein als die maximale Wanddicke des Stabilisators. Die maximale Wanddicke ist insbesondere in den Biegeabschnitten gebildet. Auch eine mittlere Wanddicke des Übergangsbereichs kann gegenüber einer maximalen Wanddicke des Stabilisators vermindert sein.

Die Lösung der oben genannten Aufgabe besteht ferner in einem Verfahren zum Herstellen eines Drehstab-Stabilisators für ein Fahrwerk eines Kraftfahrzeugs, mit den Schritten: Herstellen eines Rohres; Abbiegen von Schenkeln von dem Rohr; Vergüten des Rohres vor oder nach dem Abbiegen der Schenkel, so dass das gehärtete Rohr ein Härtegefüge mit einer Festigkeit von mindestens 1000 MPa aufweist; Erwärmen eines endseitigen Teilabschnitts der Schenkel nach dem Härten beziehungsweise Vergüten des Rohres, wobei die Festigkeit im endseitigen Teilabschnitt auf unter 800 MPa reduziert wird; Warmumformen des endseitigen Teilabschnitts nach dem Erwärmen zur Erzeugung eines umgeformten Endabschnitts; Stanzen des umgeformten Endabschnitts zur Erzeugung einer Durchgangsöffnung; Härten des umgeformten Endabschnitts derart, dass im umgeformten Endabschnitt ein gehärtetes Gefüge mit einer Festigkeit von mindestens 800 MPa aufweisen.

Das erfindungsgemäße Verfahren bietet analog dieselben Vorteile wie das erfindungsgemäße Erzeugnis, so dass diesbezüglich auf obige Beschreibung verwiesen wird. Es versteht sich, dass alle erzeugnisbezogenen Merkmale auf das Verfahren übertragbar sind, und umgekehrt. Insgesamt kann der erfindungsgemäße Stabilisator aufgrund der hohen Festigkeit der Endabschnitte auch hohen Belastungen standhalten und hat eine lange Lebensdauer, beziehungsweise es lässt sich bei gleicher Belastung des Stabilisators Material und Gewicht einsparen. Beim erfindungsgemäßen Prozess durchlaufen die Endabschnitte zwei Härteprozesse, nämlich einen ersten im Rahmen der Vergütung des als Ausgangsmaterial dienenden Rohres, und einen zweiten, nämlich beim nach dem Umformen durchgeführten partiellen Härten der Endabschnitte.

Nach einer möglichen Verfahrensführung kann das Erwärmen der endseitigen Teilabschnitte mittels induktiver Erwärmung erfolgen. Beim induktiven Erwärmen erfolgt ein Aufheizen im elektrisch leitfähigen Bauteil durch hierin erzeugte Wirbelstromverluste, wobei die Wärme unmittelbar im Bauteil selbst entsteht. Als Vorrichtung zur induktiven Erwärmung kann eine Induktionsspule, Induktionsheizung oder ein Induktionsofen verwendet werden. Die Induktionsvorrichtung erzeugt über eine von Wechselstrom durchflossene Spule ein magnetisches Wechselfeld, das im Bauteil Wirbelströme induziert.

Es ist insbesondere vorgesehen, dass die Schritte Warmumformen des endseitigen Teilabschnitts und Stanzen einer Durchgangsöffnung in den umgeformten Endabschnitt in einem gemeinsamen Werkzeug durchgeführt werden.

Das Härten der umgeformten Endabschnitte kann nach einer ersten Möglichkeit in demselben Werkzeug durchgeführt werden, wie das Warmumformen und Stanzen. In diesem Fall wäre das Werkzeug als kombiniertes Warmumform-, Stanz- und Härtewerkzeug auszuführen. Durch das Warmumformen, Stanzen und Härten in einem einzigen Werkzeug wird eine schnelle Herstellung mit kurzen Taktzeiten ermöglicht. Insbesondere kann vorgesehen sein, dass zunächst ein Schenkel des Stabilisators an dessen endseitigem Teilabschnitt erwärmt wird, dann in das kombinierte Warmumform-, Stanz- und Härtewerkzeug eingelegt wird, wobei der endseitige Teilabschnitt zum umgeformten Endabschnitts umgeformt, das Loch in den Endabschnitt gestanzt und der Endabschnitt durch schnelles Abkühlen gehärtet werden. Dann wird der Stabilisator mir seinem umgeformten und gehärteten ersten Schenkel aus dem Werkzeug entnommen, so dass anschließend der zweite Schenkel entsprechend hergestellt werden kann. Das kombinierte Werkzeug ist vorzugsweise so gestaltet, dass die Bearbeitungsreihenfolge des Schenkels in der Chronologie Umformen, Lochen und Härten erfolgt. Grundsätzlich ist es jedoch auch denkbar, dass das Lochen mit zeitlicher Überlappung oder nach dem Härten durchgeführt wird. Ein Vorteil der Herstellung in dem kombinierten Werkzeug ist, dass der Energiebedarf für die Herstellung insgesamt niedrig ist, da das Bauteil zum Warmumformen und Härten nur einmal erwärmt werden muss. Das Verfahren des kombinierten Warmumformens und Härtens kann auch als Presshärten bezeichnet werden.

Nach einer alternativen Möglichkeit kann das Härten der umgeformten Endabschnitte auch als separater Verfahrensschritt mittels einer separaten Vorrichtung durchgeführt werden. Dabei kann das Härten zeitlich an den Warmumformprozess anknüpfen, insbesondere derart, dass der Stabilisator aus dem Werkzeug entnommen und mittels der Vorrichtung weiter schnell abgekühlt wird. Das schnelle Abkühlen kann beispielsweise mittels eines Luftvolumenstroms oder in einem Flüssigkeitsbad, wie einem Öl oder Wasserbad durchgeführt werden. Das Härten kann aber auch zeitlich und räumlich von dem kombinierten Warmumform- und Stanzprozess getrennt sein. In diesem Fall wären die umgeformten Endabschnitte des Stabilisators zunächst auf Austenitisierungstemperatur zu erhitzen und anschließend schnell in einer Kühlvorrichtung abzukühlen. Bei dem separaten Härteprozess ist es nach einer ersten Variante möglich, zunächst beide Endabschnitte auf Austenitisierungstemperatur zu erhitzen und anschließend in der Härte- bzw. Kühlvorrichtung schnell abzukühlen. Nach einer zweiten Variante können die beiden Endabschnitte auch nacheinander jeweils erhitzt und abgekühlt werden.

Nach einer möglichen Verfahrensführung kann das Herstellen des Rohres durch die Teilschritte: Walzen eines Stahlbandes; Einformen des Stahlbandes zum geschlitzten Rohrkörper; und Längsschweißen des geschlitzten Rohrkörpers zum geschlossenen Rohr erfolgen. Zur Erzeugung einer variablen Blechdicke über der Länge des Stabilisators kann nach einer ersten Möglichkeit das Rohr durch Ziehen über einem abgestuften Dorn hergestellt werden. Die so hergestellten Rohre werden auch als Tailor Drawn Tube bezeichnet. Alternativ kann die variable Wanddicke des Stabilisators auch dadurch hergestellt werden, dass das als Ausgangsmaterial für das Rohr verwendete Stahlband mittels Flexiblem Walzen bearbeitet wird, bevor es zum Rohr umgeformt wird. Beim Flexiblen Walzen wird Bandmaterial mit im Wesentlichen einheitlicher Blechdicke durch Verändern des Walzspalts während des Prozesses zu Bandmaterial mit variabler Blechdicke über der Länge ausgewalzt. Die durch das Flexible Walzen erzeugten Abschnitte unterschiedlicher Dicke erstrecken sich quer zur Längsrichtung beziehungsweise zur Walzrichtung des Bandmaterials. Das Bandmaterial kann nach dem Flexiblen Walzen wieder zum Coil aufgewickelt werden und an anderer Stelle der Weiterverarbeitung zugeführt werden, oder es kann direkt weiterverarbeitet werden, beispielsweise durch Umformen zum Rohrkörper und Längsverschweißen. Alternativ kann das Rohr auch nahtlos als gezogenes Rohr hergestellt werden.

Das Vergüten des Rohres erfolgt durch die Teilschritte: Erwärmen des Rohres auf Austenitisierungstemperatur; Abschrecken des erwärmten Rohres; und Anlassen des abgeschreckten Rohres. Mit Erhitzen des Materials auf Austenitisierungstemperatur ist gemeint, dass das Material auf eine Temperatur erhitzt wird, bei der zumindest teilweise Austenit entsteht. Die Austenitisierungstemperatur liegt vorzugsweise oberhalb des Ac3-Punktes, das heißt für Stahlwerkstoffe vorzugsweise oberhalb 800°C. Das anschließende Abschrecken auf eine niedrigere Temperatur erfolgt insbesondere zwischen der oberen und unteren kritischen Abkühlgeschwindigkeit, das heißt derart schnell, dass zumindest teilweise Martensit entsteht. Durch das Abschrecken wird eine Diffusion von Eisen und Kohlenstoff vermieden, so dass sich der kubisch flächenzentrierte Austenit in das tetragonal verzerrte raumzentrierte Gitter des Martensit durch einen Schiebungs- oder Umklappprozess umwandelt. Je nach Abkühlgeschwindigkeit können auch Zwischengefüge beziehungsweise Bainit entstehen. Nach dem Abschrecken erfolgt das Anlassen, wobei das gehärtete Rohr auf mäßig hohe Temperaturen unterhalb der A1-Temperatur erwärmt und anschließende wieder abgekühlt wird. Durch das Anlassen werden innere Spannungen abgebaut, das heißt Härte und Festigkeit verringern sich, während die Zähigkeit ansteigt. Die Prozesskombination aus Härten und Anlassen wird auch als Vergüten bezeichnet.

Bevorzugte Ausführungsformen werden nachstehend anhand der Zeichnungsfiguren beschrieben. Hierin zeigt:
- Figur 1: einen erfindungsgemäßen Drehstab-Stabilisator in Draufsicht
A) mit Härteverlauf über der Länge;
B) mit Wanddickenverlauf über der Länge;
- Figur 2: das Detail X des Drehstab-Stabilisators aus Figur 1
A) in Draufsicht;
B) in Seitenansicht;
C) mit Härteverlauf;
- Figur 3: eine Vorrichtung zum Herstellen eines Stabilisators gemäß Figur 1A in verschiedenen Schritten
A) mit in die Vorrichtung zum Bearbeiten eingelegten ersten Schenkel;
B) nach dem Umformen eines endseitigen Teilabschnitts des ersten Schenkels;
C) nach dem Schneiden und Lochen des umgeformten Teilabschnitts des ersten Schenkels;
- Figur 4: die Vorrichtung aus Figur 3
A) mit in die Vorrichtung zum Bearbeiten eingelegten zweiten Schenkel;
B) nach dem Umformen eines endseitigen Teilabschnitts des zweiten Schenkels;
C) nach dem Schneiden und Lochen des umgeformten Teilabschnitts des zweiten Schenkels.

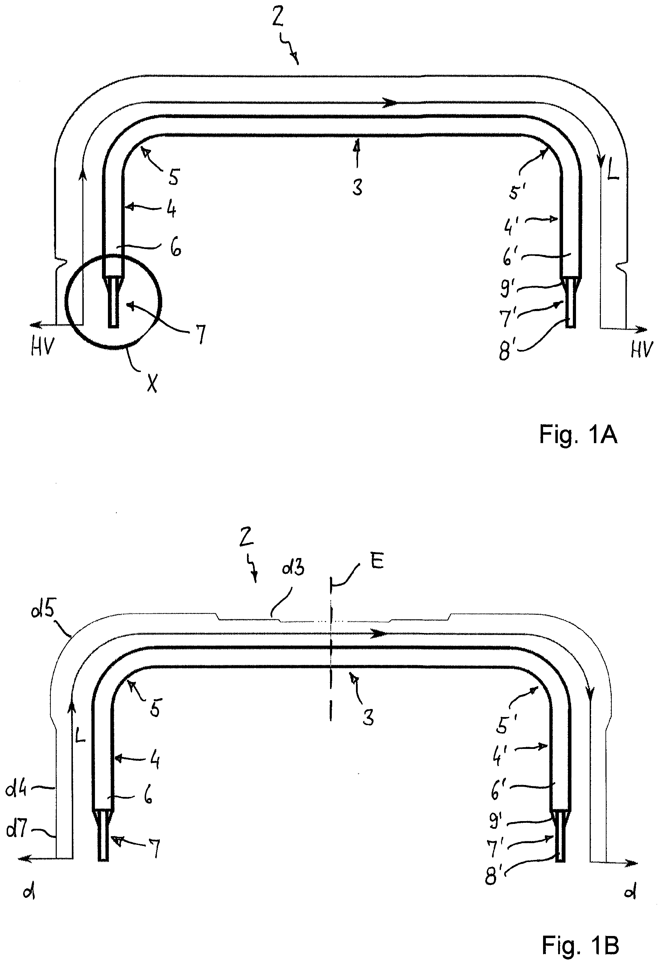

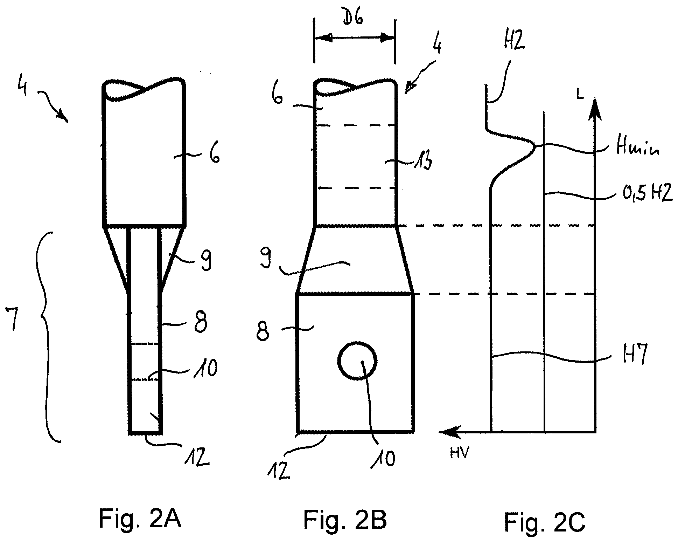

Die Figuren 1 und 2, welche nachstehend gemeinsam beschrieben werden, zeigen einen erfindungsgemäßen Stabilisator 2 für den Einsatz im Fahrwerk eines Kraftfahrzeugs. Der Stabilisator 2 weist einen Torsionsfederabschnitt 3, der auch als Drehstabfederabschnitt oder Stabilisatorrücken bezeichnet werden kann, und zwei von dem Torsionsfederabschnitt 3 winklig abgebogene Schenkel 4, 4' auf, die auch als Hebelarme bezeichnet werden können. Zwischen dem Torsionsfederabschnitt 3 und den Schenkeln 4, 4' ist jeweils ein Biegeabschnitt 5, 5' gebildet. Es ist erkennbar, dass der vorliegende Stabilisator 2 relativ zu einer Mittelebene E spiegelsymmetrisch aufgebaut ist und an beiden Enden einen Schenkel 4, 4' aufweist. Es versteht sich jedoch, dass der Stabilisator auch unsymmetrisch gestaltet sein kann und je nach Bauraumverhältnissen auch ungleich gestaltete Schenkel aufweisen kann. Sofern im Rahmen der vorliegenden Offenbarung nur auf einen der Schenkel 4, 4' Bezug genommen wird, so versteht es sich, dass dies stets auch für den anderen Schenkel 4', 4 des Stabilisators gilt.

Der Torsionsfederabschnitt 3 verläuft im Wesentlichen gerade und wird beispielsweise mittels zweier Lager (nicht dargestellt) an der Fahrzeugkarosserie befestigt, beispielsweise im Motorraum oder am Unterboden des Kraftfahrzeugs. Die Schenkel 4, 4' dienen zum Verbinden des Stabilisators 2 mit den beiden Radaufhängungen (nicht dargestellt) einer Achse des Kraftfahrzeugs. Vorliegend verlaufen die Schenkel 4, 4' im Wesentlichen gerade und schließen mit dem Torsionsfederabschnitt 3 in Draufsicht auf den Stabilisator 2 einen rechten Winkel ein. Es versteht sich jedoch, dass die Schenkel, je nach Bauraumverhältnissen und Anwendung, auch andere Ausgestaltungen haben können. Beispielsweise können die Schenkel auch gekröpft oder gebogen sein und/oder unter einem Winkel ungleich 90° zum Torsionsfederabschnitt 3 verlaufen.

Durch die Verbindung der Schenkel 4, 4' des Stabilisators 2 mit jeweils einer zugehörigen Radaufhängung des Kraftfahrzeugs, werden die beiden Radaufhängungen federnd aneinander gekoppelt. Bei Kurvenfahrten wird durch ein einseitiges Einfedern des kurvenäußeren Fahrzeugrades und gleichzeitiges Ausfedern des kurveninneren Rades ein Wanken des Kraftfahrzeugs verursacht. Diese Einfederbewegung wird über den einfedernden Schenkel 4, 4' und den Torsionsfederabschnitt 3 auf den gegenüberliegenden Schenkel 4', 4 übertragen. Auf diese Weise wird einem Wanken des Kraftfahrzeugs, das heißt einer Drehbewegung um die Fahrzeuglängsachse, entgegengewirkt.

Der Stabilisator 2 wird aus einem einteiligen im Querschnitt geschlossenen Rohrkörper hergestellt, von dem Endabschnitte abgebogen sind, welche die Schenkel 4, 4' bilden. Als Ausgangsmaterial wird ein härtbarer Stahlwerkstoff verwendet, der vorzugsweise einen Kohlenstoffgehalt von weniger als 0,5 Gewichtsprozent und einen Mangangehalt von 0,5 bis 3,0 Gewichtsprozent aufweist. Neben Eisen können weitere übliche Legierungselemente wie Chrom und/oder Bor enthalten sein. Der Stabilisator 2 beziehungsweise der Rohrkörper zur Herstellung des Stabilisators ist vergütet, das heißt gehärtet und angelassen. Dabei kann der Rohrkörper vor oder nach dem Abbiegen der Schenkel 4, 4' vergütet werden.

Jeder der Schenkel 4, 4' hat, ausgehend vom Biegeabschnitt 5, 5' einen rohrförmigen Abschnitt 6, 6' mit einem zumindest etwa gleichbleibendem Querschnitt über der Länge und einen umgeformten Endabschnitt 7, 7'. Die umgeformten Endabschnitte 7, 7' weisen jeweils einen abgeflachten Bereich 8, 8' und einen Übergangsbereich 9, 9' auf. Der Übergangsbereich 9, 9' verbindet den abgeflachten Endbereich 8, 8' mit dem rohrförmigen Schenkel 6, 6' und haben entsprechend einen variablen Querschnitt über der Länge des jeweiligen Übergangsbereichs 9, 9'.

Es ist insbesondere in Figur 2B erkennbar, dass die flachen Endbereiche 8, 8' der umgeformten Endabschnitte 7, 7' gelocht sind. Dabei dienen die Durchgangsöffnungen 10, 10' zum Verbinden des Stabilisators 2 mit einer Fahrwerkskomponente des Kraftfahrzeugs. Die flachen Endbereiche 8, 8' sind flüssigkeitsdicht beziehungsweise gasdicht verschlossen, und zwar vorzugsweise bis mindestens 2 bar Innendruck, so dass ein Eindringen von Schmutz und Wasser verhindert wird. Das gasdichte Verschließen erfolgt im Rahmen der Umformoperation. Dabei ist es günstig, wenn die Stabilisatorenden derart gasdicht sind, dass der Innendruck nach 5 Minuten noch mindestens das 0,75-fache des maximal aufgebrachten Drucks beträgt.

Es ist ferner in Figur 2A erkennbar, dass die Übergangsbereiche 9, 9' zwischen dem jeweils anschließenden flachen Endbereich 8, 8' und dem Rohrabschnitt 6, 6' des Schenkels 4, 4' einen variablen Querschnitt über der Länge haben, so dass ein querschnittsverändernder Übergang zwischen dem flachen Endbereich 8, 8' und dem rohrförmigen Schenkelabschnitt 6, 6' gebildet ist.

Wie oben bereits erwähnt, ist der Stabilisator 2 aus einem vergüteten Stahlwerkstoff hergestellt. Dabei beträgt die Grundfestigkeit des vergüteten Stahlwerkstoffs, je nach Ausgangsmaterial, mindestens 1000 MPa, insbesondere mindestens 1200 MPa, gegebenenfalls auch mindestens 1400 MPa. Beispielsweise kann ein Stabilisator-Rohrkörper aus vergütetem Stahlmaterial 26MnB5 eine Grundfestigkeit von etwa 1400 MPa bis 1585 MPa aufweisen. Ein Rohrkörper aus vergütetem Stahlmaterial 34MnB5 kann eine noch höhere Grundfestigkeit von etwa 1585 MPa bis 1680 MPa aufweisen.

In fertig hergestelltem Zustand des Stabilisators haben die umgeformten Endabschnitte 7, 7' eine Festigkeit von mindestens 800 MPa, insbesondere von mindestens 1000 MPa. Die Festigkeit der umgeformten Endabschnitte 7, 7' kann geringer als die Grundfestigkeit des vergüteten Stahlmaterials sein und insbesondere mindestens das 0,8-fache bis 0,9-fache der Festigkeit des vergüteten Stahlmaterials betragen. Bei einer Festigkeit des vergüteten Stahlmaterials von 1200 MPa könnte die Festigkeit der umgeformten Endabschnitte 7, 7' demnach zwischen 960 MPa und 1080 MPa liegen.

Die Festigkeit des Stabilisators korreliert mit der Härte, für die ein beispielhafter Verlauf in Figur 1A und, als vergrößertes Detail für einen der Schenkel 4, 4' des Stabilisators 2, in Figur 2C dargestellt ist. Dabei ist die Grundhärte des Stabilisators ist mit H2 bezeichnet und die Härte der Endabschnitte 7, 7' mit H7. Eine mittlere Grundhärte ist mit 0,5H2 angegeben. Es ist erkennbar, dass die Härte H7 der Endabschnitte 7, 7' etwas geringer ist als die Grundhärte H2, insbesondere etwa dem 0,9-fachen der Grundhärte H2 entspricht. Beispielhafte Werte für die Härte des Stabilisators 2 lassen sich wie folgt angeben. Die Grundhärte H2 kann mindestens 410 HV, insbesondere mindestens 500 HV betragen. Die umgeformten Endabschnitte 7, 7' können eine Härte H7 von mindestens 310 HV, insbesondere von mindestens 400 HV aufweisen.

Weiter ist erkennbar, dass die Endabschnitte 7, 7' ausgehend von einer Stirnseite Ende 12, 12' über den jeweiligen Endbereich 8, 8' und den daran anschließenden Übergangsbereich 9, 9' hinaus eine im Wesentlichen gleichbleibende Härte H7 beziehungsweise Festigkeit aufweist, die insbesondere größer als das 0,8-fache der Grundhärte H2 beziehungsweise Grundfestigkeit des Stabilisators 2 ist. Erst im rohrförmigen Abschnitt 6, 6' des Schenkels 4, 4', der geometriebedingt ein größeres Flächenträgheitsmoment aufweist als der umgeformte Endabschnitt 7, 7', liegt ein Teilbereich 13, 13' mit reduzierter Härte Hmin beziehungsweise reduzierter Festigkeit vor. Dabei ist die reduzierte Härte Hmin beziehungsweise reduzierte Festigkeit kleiner als die Grundhärte beziehungsweise Grundfestigkeit des Stabilisators 2, respektive als die Härte beziehungsweise Festigkeit des Torsionsabschnitts 3. Vorliegend ist die reduzierte Härte Hmin insbesondere kleiner als das 0,7-fache der Grundhärte des Stabilisators 2 und größer als die mittlere Grundhärte 0,5H2 des Stabilisators 2, das heißt 0,7H2 > Hmin > 0,5H2. Dies kann für die Festigkeit entsprechend gelten. Der weiche Teilbereich 13, 13' ist von dem Übergangsbereich 9, 9' deutlich beabstandet, insbesondere um eine Länge die größer ist als ein halber Durchmesser D6 des rohrförmigen Schenkelabschnitts 6, 6'.

In Figur 1B ist der Wanddickenverlauf d des Stabilisators 2 über der Länge L eingezeichnet. Es ist erkennbar, dass der Drehstab-Stabilisator eine variable Wanddicke d über der Länge L hat, wobei es sich versteht, dass die Wanddicke auch gleichbleibend über der Länge sein kann. Vorliegend ist der Wanddickenverlauf in Bezug auf eine Mittelebene des Stabilisators symmetrisch. Konkret ist insbesondere vorgesehen, dass die Wanddicke d4 der Schenkel 4, 4' gegenüber der Wanddicke d5 der Biegeabschnitte 5, 5' reduziert ist. In den Biegeabschnitten 5, 5' hat der Stabilisator die größte Wanddicke d5. Ausgehend von den beiden Biegeabschnitten 5, 5' in Richtung Mittelebene hat der Stabilisator im Torsionsfederabschnitt 3 wiederum eine reduzierte Wanddicke d3, welche vorliegend zwei Teilbereiche mit unterschiedlicher Dicke umfasst. Es versteht sich, dass in Abhängigkeit von den Belastungen des Stabilisators auch eine von zwei abweichende Zahl von Teilbereichen wie eins, drei oder mehr als drei in den Stabilisator 2 eingearbeitet sein kann. Die Übergangsbereiche zwischen jeweils zwei Wanddickenbereichen d3, d4, d5 sind stetig, so dass sich eine möglichst gleichmäßige Beanspruchung ergibt und Spannungsspitzen vermieden werden. Konkret ist insbesondere vorgesehen, dass die umgeformten Endabschnitte 7, 7' eine Wanddicke d7 haben, die um mindestens 20 % kleiner als die maximale Wanddicke d5 des Stabilisators ist.

Zur Herstellung eines Rohrkörpers mit variabler Dicke über der Länge kann beispielsweise ein zunächst mit gleichbleibender Wanddicke hergestelltes Rohr über einem abgestuften Dorn gezogen werden, so dass im Rohr Abschnitte mit unterschiedlicher Wandstärke erzeugt werden (Tailor Drawn Tube). Alternativ kann das Rohr bereits aus flexibel gewalztes Bandmaterial als Ausgangsmaterial hergestellt werden, worauf weiter unten noch näher eingegangen wird. Derartig flexibel gewalztes Bandmaterial wird auch als Tailor Rolled Blank bezeichnet.

Ein erfindungsgemäßes Verfahren zur Herstellung des Stabilisators 2 umfasst die folgenden Verfahrensschritte: Herstellen eines Rohres; Abbiegen der Schenkel 8, 8' von dem Rohr; Vergüten des Rohres vor oder nach dem Abbiegen der Schenkel, so dass das vergütete Rohr ein Härtegefüge mit einer Festigkeit von mindestens 1000 MPa aufweist; Erwärmen eines endseitigen Teilabschnitts eines der Schenkel 8, 8' nach dem Härten des Rohres, wobei die Festigkeit im endseitigen Teilabschnitt auf unter 800 MPa reduziert wird; Warmumformen des endseitigen Teilabschnitts nach dem Erwärmen zur Erzeugung des umgeformten Endabschnitts 7, 7'; Stanzen des umgeformten Endabschnitts 7, 7' zur Erzeugung der Durchgangsöffnung 10, 10'; Härten des umgeformten Endabschnitts derart, dass im umgeformten Endabschnitt ein gehärtetes Gefüge mit einer Festigkeit von mindestens 800 MPa aufweisen. Anschließend wird der zweite Schenkel 8', 8 in entsprechender Weise bearbeitet.

Das Herstellen des Rohres kann durch die Teilschritte: Walzen eines Stahlbandes; Einformen des Stahlbandes zu einem geschlitzten Rohrkörper; und Längsschweißen des geschlitzten Rohrkörpers zum geschlossenen Rohr erfolgen. Zur Erzeugung einer variablen Blechdicke über der Länge des Stabilisators 2 kann das Stahlband vor dem Umformen zum Rohr zuvor flexibel gewalzt werden, oder es kann ein Rohr mit zunächst konstanter Wandstärke nach dem Schweißen flexibel gezogen werden. Beim Flexiblen Walzen erhält das Bandmaterial während des Prozesses durch Verändern des Walzspalts eine variable Blechdicke über der Länge. Das Abbiegen der Schenkel 8, 8' erfolgt in einer entsprechenden Biegevorrichtung. Das Vergüten des Rohres erfolgt durch die Teilschritte: Erwärmen des Rohres auf Austenitisierungstemperatur; Abschrecken des erwärmten Rohres; und Anlassen des abgeschreckten Rohres. Das Vergüten erfolgt vorzugsweise nach dem Abbiegen der Schenkel 8, 8', kann prinzipiell aber auch vorher durchgeführt werden. Nach dem Vergüten liegt der vergütete Rohrkörper 2' mit im Wesentlichen konstantem Querschnitt über der Länge L des Rohrkörpers und der oben genannten Grundfestigkeit von mindestens 1000 MPa vor.

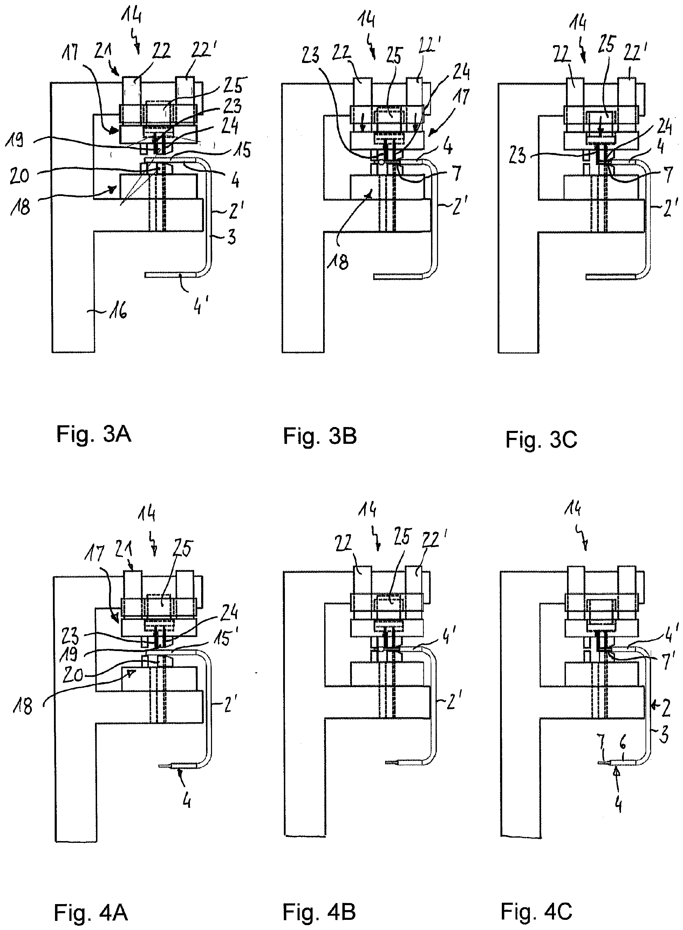

Hiervon ausgehend werden die endseitigen Teilabschnitte der Schenkel 8, 8' erzeugt, was nachstehend anhand der Figuren 3A bis 3C erläutert wird.

In den Figuren 3A bis 3C ist ein kombiniertes Warmumform-, Stanz- und Härtewerkzeug 14 gezeigt, das im Folgenden der Einfachheit halber auch kurz Werkzeug bezeichnet wird. Vor dem Einlegen des vergüteten Rohrkörpers 2' in das Werkzeug 14 wird der endseitige Teilabschnitt 15 des ersten Schenkels 8 erwärmt, was durch induktive Erwärmung erfolgen kann. Die Länge des erwärmten Teilabschnitts 15 entspricht zumindest etwa der Länge des herzustellenden umgeformten Endabschnitts 7 des Schenkels 8. Nach dem Erwärmen des Teilabschnitts 15 wird der Rohrkörper 2' schnell in das Werkzeug eingelegt, was in Figur 3A gezeigt ist.

Das kombinierte Warmumform-, Stanz- und Härtewerkzeug 14 weist ein Gestell 16, ein oberes Werkzeugteil 17 und ein unteres Werkzeugteil 18 auf. Am oberen Werkzeugteil 17 ist ein oberer Formeinsatz 19 vorgesehen, der mit einem entsprechenden unteren Formeinsatz 20 des unteren Werkzeugteils 18 zusammenwirkt. Zum Umformen des Schenkels 8 wird das obere Werkzeugteil 17 in Richtung zum unteren Werkzeugteil 18 bewegt, wobei der dazwischen eingelegte Rohrkörper 2' an dem endseitigen Schenkelabschnitt 15 von den Formeinsätzen 19, 20 umgeformt, beziehungsweise geplättet und gepresst wird. Die beiden Formeinsätze 19, 20 bilden insofern Teile der Warmumformvorrichtung und können auch als Press- oder Plätteinsätze bezeichnet werden. Zum Bewegen des oberen Werkzeugteils 17 ist eine Antriebseinheit 21 vorgesehen, die insbesondere zwei Hydraulikzylinder 22, 22' umfassen kann. Figur 3B zeigt das Werkzeug 14 mit ausgefahrenen Hydraulikzylindern 22, 22' und entsprechend abgesenktem oberen Werkzeugteil 17 sowie den umgeformten Zustand des Rohrkörpers 2'. Es ist erkennbar, dass der zuvor rohrförmige Teilabschnitt 15 des Schenkels 4 zum umgeformten Abschnitt 7 mit abgeflachtem Endbereich 8 und Übergangsbereich 9 umgeformt worden ist.

Nachfolgend wird das überstehende Ende des umgeformten Abschnitts 7 abgeschnitten und der abgeflachte Endbereich 8 gelocht. Hierfür hat das Werkzeug 14 am oberen Werkzeugteil 17 eine Schneidvorrichtung 23 zum Beschneiden des überstehenden Endes und eine Stanzvorrichtung 24 zum Lochen des abgeflachten Endbereichs 8. Die Schneidvorrichtung 23 und die Stanzvorrichtung 24, die auch als Lochvorrichtung bezeichnet werden kann, haben eine gemeinsame Antriebseinheit 25, die insbesondere einen Hydraulikzylinder umfasst. Während die Pressenkraft der Umformvorrichtung 19, 20 zum Umformen des Schenkels 8 aufrechterhalten wird, fahren ein Messer und ein Stempel durch die Formeinsätze 18, 20 und Lochen den abgeflachten Bereich 7 und beschneiden das Ende. Figur 3C zeigt das Werkzeug 14 mit ausgefahrenem Hydraulikzylinder 25 und entsprechend abgesenkter Schneid- und Stanzvorrichtung 23, 24. Es ist erkennbar, dass ein überstehendes Ende des umgeformten Abschnitts 7 abgeschnitten und die Durchgangsöffnung 10 in den abgeflachtem Endbereich 8 eingearbeitet worden ist.

Das Härten des umgeformten Endabschnitts 8 erfolgt durch schnelles Abkühlen des Endabschnitts durch flächigen Kontakt des Werkstücks mit den Form- beziehungsweise Presseneinsätzen 18, 20. Das schnelle Abkühlen erfolgt derart schnell, dass ein zumindest teilweise martensitisches Gefüge im umgeformten Endabschnitt 8 entsteht. Dabei wird eine Diffusion von Eisen und Kohlenstoff vermieden, so dass der nach dem Erwärmen des Teilabschnitts 15 vorliegende kubisch flächenzentrierte Austenit in das tetragonal verzerrte raumzentrierte Gitter des Martensit durch einen Schiebungs- oder Umklappprozess umwandelt. Von Vorteil ist dabei im Hinblick auf die Dichtigkeit des abgeflachten Endbereichs 8 ist, dass Martensit aufgrund seiner Gitterstruktur ein etwas größeres Volumen hat als Austenit, so dass die aufeinander liegenden Wandungen des abgeflachten Endbereichs 8 besonders fest und dicht aufeinander liegen.

Nach dem Herstellen des umgeformten und gehärteten Abschnitts 7 des ersten Schenkels 8 wird der Stabilisator 2 aus dem Werkzeug 14 entnommen. Anschließend wird das zweite Ende 15' beziehungsweise der zweite Schenkel 8' in analoger Form bearbeitet. Dieser Prozess ist in den Figuren 4A bis 4C gezeigt, welcher identisch abläuft wie der Prozess zur Herstellung des ersten Schenkels 8. Insofern wird diesbezüglich abkürzend auf obige Beschreibung zur Bearbeitung des ersten Schenkels 8 Bezug genommen.

Es versteht sich, dass der angegebene Prozess nur beispielhaft ist und auch modifiziert werden kann. Insbesondere kann der Stabilisator nach dem Warmumformen auch direkt aus dem Umformwerkzeug entnommen werden und durch gesonderte Mittel gehärtet beziehungsweise schnell abgekühlt werden. Beispielsweise können die umgeformten Endabschnitte 8, 8' nach der Entnahme des Stabilisators 2 aus dem Umformwerkzeug in einer separaten Kühlvorrichtung mittels eines flüssigen Mediums abgekühlt werden.

Optional kann der Rohrkörper vor dem Umformen und Härten der Schenkelenden 7, 7' innengestrahlt werden. Nach dem Herstellen der umgeformten und gehärteten Abschnitte 7, 7' kann der Stabilisator 2 außengestrahlt, beschichtet und optional mit Anbauteilen versehen werden.

Ein Vorteil des Stabilisators 2 beziehungsweise des Verfahrens zur Herstellung besteht darin, dass dieser aufgrund der hohen Festigkeit der Endabschnitte 7, 7' auch hohen Belastungen standhalten kann und eine lange Lebensdauer aufweist. Die Stabilisatorenden 7, 7' können in günstiger Weise in einem einzigen Werkzeug 14, nämlich dem beschriebenen kombinierten Warmumform-, Stanz- und Härtewerkzeug 14 einfach, schnell und prozesssicher herstellen. Das Härten der Endabschnitte 7, 7' bewirkt nicht nur eine höhere Festigkeit, sondern wirkt sich auch positiv auf die Dichtigkeit des Stabilisators 2 aus, was insgesamt zu einer langen Lebensdauer beiträgt.

### Bezugszeichenliste

- 2, 2': Stabilisator, Rohrkörper
- 3: Torsionsfederabschnitt
- 4, 4': Schenkel
- 5, 5': Biegeabschnitt
- 6, 6': rohrförmiger Abschnitt
- 7, 7': umgeformter Abschnitt
- 8, 8': abgeflachter Bereich
- 9, 9': Übergangsbereich
- 10, 10': Durchgangsöffnung
- 11:
- 12, 12': Stirnseite
- 13, 13': Teilbereich
- 14: Werkzeug
- 15, 15': endseitiger Teilabschnitt
- 16: Gestell
- 17: oberes Werkzeugteil
- 18: unteres Werkzeugteil
- 19: oberer Formeinsatz
- 20: unterer Formeinsatz
- 21: Antriebseinheit
- 22, 22': Hydraulikzylinder
- 23: Schneidvorrichtung
- 24: Stanzvorrichtung
- 25: Antriebseinheit

- d: Wanddicke
- D: Durchmesser
- E: Ebene
- H: Härte
- L: Länge

## Patentansprüche

1. Drehstab-Stabilisator für ein Fahrwerk eines Kraftfahrzeugs, hergestellt aus einem Rohrkörper, umfassend:
einen Torsionsfederabschnitt (3) und zwei von dem Torsionsfederabschnitt (3) abgebogene Schenkel (4, 4'),
wobei die Schenkel (4, 4') jeweils einen umgeformten Endabschnitt (7, 7') mit einer Durchgangsöffnung (10, 10') und einen rohrförmigen Abschnitt (6, 6') aufweisen,
wobei der Torsionsfederabschnitt (3) ein gehärtetes Gefüge mit einer Festigkeit von mindestens 1000 MPa aufweist, und
wobei die umgeformten Endabschnitte (7, 7') ein gehärtetes Gefüge mit einer Festigkeit von mindestens 800 MPa aufweisen,
**dadurch gekennzeichnet, dass** die Schenkel (4, 4') im rohrförmigen Abschnitt (6, 6') jeweils einen Teilbereich (13, 13') mit einer Festigkeit aufweisen, die kleiner ist als Festigkeit des Torsionsfederabschnitts (3).

2. Drehstab-Stabilisator nach Anspruch 1,
**dadurch gekennzeichnet, dass** die umgeformten Endabschnitte (7, 7') eine Festigkeit aufweisen, die mindestens das 0,8-fache der Festigkeit des Torsionsfederabschnitts (3) beträgt.

3. Drehstab-Stabilisator nach Anspruch 1 oder 2,
**dadurch gekennzeichnet, dass** der Torsionsfederabschnitt (3) eine Härte (H2) von mindestens 310 HV, insbesondere von mindestens 410 HV aufweist, und dass die umgeformten Endabschnitte (7, 7') eine Härte (H7) von mindestens 250 HV, insbesondere von mindestens 310 HV aufweisen.

4. Drehstab-Stabilisator nach einem der Ansprüche 1 bis 3,
**dadurch gekennzeichnet, dass** der umgeformten Endabschnitt (7, 7') einen flachen Endbereich (8, 8') mit etwa konstantem Querschnitt über der Länge (L) und einen Übergangsbereich (9, 9') mit einem variablen Querschnitt über der Länge (L) hat.

5. Drehstab-Stabilisator nach einem der Ansprüche 1 bis 4,
**dadurch gekennzeichnet, dass** die Teilbereiche (13, 13') der rohrförmigen Abschnitte (6, 6') eine Festigkeit aufweisen, die kleiner ist als das 0,7-fache der Festigkeit des Torsionsfederabschnitts (3) und/oder die größer ist als das 0,5-fache der Festigkeit des Torsionsfederabschnitts (3).

6. Drehstab-Stabilisator nach einem der Ansprüche 1 bis 5,
**dadurch gekennzeichnet, dass** der Teilbereich (13, 13') mit geringer Festigkeit von dem umgeformten Endabschnitt (7, 7') einen Abstand aufweist, der mindestens dem halben Durchmesser (D6) des rohrförmigen Abschnitts (6, 6') entspricht.

7. Drehstab-Stabilisator nach einem der Ansprüche 1 bis 6,
**dadurch gekennzeichnet, dass** die Endabschnitte (7, 7') der Schenkel (4, 4') flüssigkeitsdicht und/oder gasdicht verschlossen sind.

8. Drehstab-Stabilisator nach einem der Ansprüche 1 bis 7,
**gekennzeichnet durch** eine variable Wanddicke (d) über der Länge (L), wobei eine Wanddicke (d7) der Endabschnitte (7, 7') kleiner ist als eine maximale Wanddicke (d5) des Drehstab-Stabilisators (2).

9. Drehstab-Stabilisator nach Anspruch 8,
**dadurch gekennzeichnet, dass** die Wanddicke (d7) der Endabschnitte (7, 7') mindestens 20 % kleiner ist als die maximale Wanddicke, wobei die maximale Wanddicke (d5) insbesondere in einem Biegeabschnitt (5, 5') zwischen dem Torsionsfederabschnitt (3) und einem Schenkel (4, 4') gebildet ist.

10. Drehstab-Stabilisator nach einem der Ansprüche 1 bis 9,
**dadurch gekennzeichnet, dass** der Drehstab-Stabilisator aus einem Stahlwerkstoff mit einem Kohlenstoffgehalt von weniger als 0,5 % und einem Mangangehalt von 0,5 % bis 3,0 % hergestellt ist.

11. Verfahren zum Herstellen eines Drehstab-Stabilisators für ein Fahrwerk eines Kraftfahrzeugs, mit den Schritten:
- Herstellen eines Rohres,
- Abbiegen von Schenkeln (4, 4') von dem Rohr,
- Vergüten des Rohres vor oder nach dem Abbiegen der Schenkel (4, 4'), so dass das vergütete Rohr ein gehärtetes Gefüge mit einer Festigkeit von mindestens 1000 MPa aufweist,
- Erwärmen eines endseitigen Teilabschnitts (15, 15') eines ersten der Schenkel (4, 4') nach dem Vergüten des Rohres, wobei die Festigkeit im endseitigen Teilabschnitt (15, 15') auf unter 800 MPa reduziert wird,
- Warmumformen des endseitigen Teilabschnitts (15, 15') nach dem Erwärmen zu einem umgeformten Endabschnitt (7, 7'),
- Stanzen des umgeformten Endabschnitts (7, 7') zur Erzeugung einer Durchgangsöffnung (10, 10'),
- Härten des umgeformten Endabschnitts (7, 7') derart, dass im umgeformten Endabschnitt (7, 7') ein gehärtetes Gefüge mit einer Festigkeit von mindestens 800 MPa erzeugt wird.

12. Verfahren nach Anspruch 11,
**dadurch gekennzeichnet, dass** das Erwärmen der endseitigen Teilabschnitte (15, 15') mittels induktiver Erwärmung erfolgt.

13. Verfahren nach Anspruch 11 oder 12,
**dadurch gekennzeichnet, dass** die Schritte Warmumformen des endseitigen Teilabschnitts (15, 15') zum umgeformten Endabschnitt (7, 7') und Stanzen des umgeformten Endabschnitts (7, 7') zur Erzeugung einer Durchgangsöffnung (10, 10') in einem kombinierten Werkzeug (14) durchgeführt werden.

14. Verfahren nach einem der Ansprüche 11 bis 13,
**dadurch gekennzeichnet, dass** das Härten des umgeformten Endabschnitts (7, 7') in dem kombinierten Werkzeug (14), insbesondere mittels gekühlter Werkzeugkontaktflächen, oder mittels einer separaten Kühlvorrichtung gekühlt wird.

15. Verfahren nach einem der Ansprüche 11 bis 14,
**dadurch gekennzeichnet, dass** das Herstellen des Rohres durch die Teilschritte:
- Walzen eines Stahlbandes,
- Einformen des Stahlbandes zum geschlitzten Rohrkörper, und
- Längsschweißen des geschlitzten Rohrkörpers zum geschlossenen Rohr erfolgt, und dass das Vergüten des Rohres durch die Teilschritte:
- Erwärmen des Rohres auf Austenitisierungstemperatur,
- Abschrecken des erwärmten Rohres und
- Anlassen des Rohres
erfolgt.

## Claims

1. A stabiliser bar for a chassis of a motor vehicle, comprising:
a torsion spring portion (3) and two arms (4, 4') bent away from the torsion spring portion (3),
wherein the arms (4, 4') each comprise a formed end portion (7, 7') with a through-opening (10, 10') and a tubular portion (6, 6'),
wherein the torsion spring portion (3) comprises a hardened structure with a strength of at least 1000 MPa, and
wherein the formed end portions (7, 7') comprise a hardened structure with a strength of at least 800 MPa, **characterised in that** the arms (4, 4') each comprise a partial region (13, 13') in the tubular portion (6, 6') with a strength that is greater than the strength of the torsion spring portion (3).

2. A stabiliser bar according to claim 1,
**characterised in that** the formed end portions (7, 7') comprise a strength which amounts to at least 0.8 times the strength of the torsion spring portion (3).

3. A stabiliser bar according to claim 1 or 2,
**characterised in that** the torsion spring portion (3) comprises a hardness (H2) of at least 310 HV, in particular of at least 410 HV, and that the formed end portions (7, 7') comprise a hardness (H7) of at least 250 HV, in particular of at least 310 HV.

4. A stabiliser bar according to any one of claims 1 to 3,
**characterised in that** the formed end portion (7, 7') comprises a flattened end region (8, 8') with an approximately constant cross-section along the length (L) and a transition region (9, 9') with a variable cross-section along the length (L).

5. A stabiliser bar according to any one of claims 1 to 4,
**characterised in that** the partial regions (13, 13') of the tubular portions (6, 6') comprise a low strength that is smaller than 0.7 times the strength of the torsion spring portion (3) and/or greater than 0.5 times the strength of the torsion spring portion (3).

6. A stabiliser bar according to any one of claims 1 to 5,
**characterised in that** the partial region (13, 13') with the low strength comprises a distance from the formed end portion (7, 7') that corresponds at least to half the diameter (D6) of the tubular portion (6, 6').

7. A stabiliser bar according to any one of claims 1 to 6,
**characterised in that** the formed end portions (7, 7') of the arms (4, 4') are closed so as to be liquid-proof and/or gas-proof.

8. A stabiliser bar according to any one of claims 1 to 7,
**characterised by** a variable wall thickness (d) along the length (L), wherein a wall thickness (d7) of the end portions (7, 7') is smaller than a maximum wall thickness (d5) of the stabiliser bar (2).

9. A stabiliser bar according to claim 8,
**characterised in that** the wall thickness (d7) of the end portions (7, 7') is at least 20 % smaller than the maximum wall thickness, wherein the maximum wall thickness (d5) is formed in particular in a bent portion (5, 5') between the torsion spring portion (3) and an arm (4, 4').

10. A stabiliser bar according to any one of claims 1 to 9,
**characterised in that** the stabiliser bar is produced from a steel material with a carbon content of less then 0.5 % and a manganese content of 0.5 % to 3.0 %.

11. A process of producing a stabiliser bar for a chassis of a motor vehicle, comprising the following process steps:
- producing a tube;
- bending the tube such that arms (4, 4') are formed;
- hardening and tempering the tube such that the tube obtains a hardened structure with a strength of at least 1000 MPa;
- heating an end-sided partial portion (15, 15') of at least one of the arms (4, 4') after the tube has been hardened and tempered, wherein the strength in the end-sided partial portion (15, 15') is reduced to a value below 800 MPa;
- after heating, hot forming the end-sided partial portion (15, 15,) to a formed end portion (7, 7');
- punching the formed end portion (7, 7') to produce a through-opening (10, 10');
- hardening the formed end portion (7, 7') such that the formed end portion (7, 7') obtains a hardened structure with a strength of at least 800 MPa.

12. A process according to claim 11,
**characterised in that** the process of heating the end-sided partial portions (15, 15') is effected by induction heating.

13. A process according to claim 11 or 12,
**characterised in that** the steps of hot forming the end-sided partial portion (15, 15') into the formed end portion (7, 7') and of punching the formed end portion (7, 7') to produce a through-opening (10, 10') are carried out in a combined tool (14) .

14. A process according to any one of claim 11 to 13,
**characterised in that** the step of hardening the formed end portion (7, 7') is effected in the combined tool (14), in particular by cooled tool contact faces or by means of a separate cooling device.

15. A process according to any one of claims 11 to 14,
**characterised in that** the step of producing the tube is effected by the sub-steps:
- rolling a steel strip,
- forming the steel strip into a slotted tubular member, and
- longitudinally welding the slotted tubular member to form a closed tube,
and that the step of hardening and tempering the tube is effected by the sub-steps:
- heating the tube to austenitising temperature,
- quenching the heated tube and
- tempering the tube.

## Revendications

1. Barre de torsion stabilisatrice pour un châssis d'un véhicule automobile, fabriquée à partir d'un corps tubulaire, comprenant
un tronçon de ressort de torsion (3) et deux branches (4, 4') incurvées à partir du tronçon de ressort de torsion (3),
les branches (4, 4') comportant chacune un tronçon d'extrémité (7, 7') ayant subi un formage avec un orifice de passage (10, 10') et un tronçon de forme tubulaire (6, 6'),
le tronçon de ressort de torsion (3) comportant une structure trempée d'une résistance d'au moins 1000 MPa et
les tronçons d'extrémité (7, 7') ayant subi un formage comportant une structure trempée d'une résistance d'au moins 800 MPa,
**caractérisé en ce que** les branches (4, 4') dans le tronçon de forme tubulaire (6, 6') présentent chacune une zone partielle (13, 13') d'une résistance qui est inférieure à la résistance du tronçon de ressort de torsion (3).

2. Barre de torsion stabilisatrice selon la revendication 1, **caractérisée en ce que** les tronçons d'extrémité (7, 7') ayant subi un formage font preuve d'une résistance qui correspond à au moins 0,8 fois la résistance du tronçon à ressort de torsion (3).

3. Barre de torsion stabilisatrice selon la revendication 1 ou 2, **caractérisée en ce que** le tronçon de ressort de torsion (3) fait preuve d'une dureté d'au moins 310HV, notamment d'au moins 410 HV, et **en ce que** les tronçons d'extrémité (7, 7') ayant subi un formage font preuve d'une dureté (H7) d'au moins 250 HV, notamment d'au moins 310 HV.

4. Barre de torsion stabilisatrice selon l'une quelconque des revendications 1 à 3, **caractérisée en ce que** le tronçon d'extrémité (7, 7') comporte une zone d'extrémité (8, 8') plate avec une section transversale approximativement constante sur la longueur (L) et une zone de transition (9, 9') avec une section transversale variable sur la longueur (L).

5. Barre de torsion stabilisatrice selon l'une quelconque des revendications 1 à 4, **caractérisée en ce que** les zones partielles (13, 13') des tronçons de forme tubulaire (6, 6') font preuve d'une résistance qui est inférieure à 0,7 fois la résistance du tronçon à ressort de torsion (3) et/ou qui est supérieure à 0,5 fois la résistance du tronçon à ressort de torsion (3).

6. Barre de torsion stabilisatrice selon l'une quelconque des revendications 1 à 5, **caractérisée en ce que** la zone partielle (13, 13') de plus faible résistance présente par rapport au tronçon d'extrémité (7, 7') ayant subi un formage un écart qui correspond au moins au demi-diamètre (D6) du tronçon de forme tubulaire (6, 6')

7. Barre de torsion stabilisatrice selon l'une quelconque des revendications 1 à 6, **caractérisée en ce que** les tronçons d'extrémité (7, 7') des branches (4, 4') sont fermées de manière étanche aux liquides et/ou étanche aux gaz.

8. Barre de torsion stabilisatrice selon l'une quelconque des revendications 1 à 7, **caractérisée par** une épaisseur de paroi (d) variable sur la longueur (L), une épaisseur de paroi (d7) des tronçons d'extrémité (7, 7') étant inférieure à une épaisseur de paroi maximale (d5) de la barre de torsion stabilisatrice.

9. Barre de torsion stabilisatrice selon la revendication 8, **caractérisée en ce que** l'épaisseur de paroi (d7) des tronçons d'extrémité (7, 7') est inférieure d'au moins 20 % à l'épaisseur de paroi maximale, l'épaisseur de paroi maximale (d5) étant créée notamment dans un tronçon incurvé (5, 5') entre le tronçon à ressort de torsion (3) et une branche (4, 4').

10. Barre de torsion stabilisatrice selon l'une quelconque des revendications 1 à 9, **caractérisée en ce que** la barre de torsion stabilisatrice est fabriquée dans un matériau en acier avec une teneur en carbone inférieure à 0,5 % et une teneur en manganèse de 0,5 % à 3,0 %.

11. Procédé destiné à fabriquer une barre de torsion stabilisatrice pour un châssis d'un véhicule automobile, comportant les étapes :
- de la fabrication d'un tube,
- de l'incurvation de branches (4, 4') à partir du tube,
- du traitement thermique du tube avant ou après l'incurvation de branches (4, 4'), pour conférer au tube ayant subi un traitement thermique une structure trempée d'une résistance d'au moins 1000 MPa,
- de l'échauffement d'un tronçon partiel (15, 15') d'extrémité d'une première des branches (4, 4') après le traitement thermique du tube, la résistance dans le tronçon partiel (15, 15') d'extrémité étant réduite à moins de 800 MPa,
- du thermoformage du tronçon partiel (15, 15') d'extrémité après l'avoir chauffé en un tronçon d'extrémité (7, 7') ayant subi un formage,
- du découpage du tronçon d'extrémité (7, 7') ayant subi un formage pour créer un orifice de passage (10, 10'),
- de la trempe du tronçon d'extrémité (7, 7') ayant subi un formage de sorte à créer dans le tronçon d'extrémité (7, 7') ayant subi un formage une structure trempée d'une résistance d'au moins 800 MPa.

12. Procédé selon la revendication 11, **caractérisé en ce que** l'échauffement des tronçons partiels d'extrémité (15, 15') s'effectue par induction.

13. Procédé selon la revendication 11 ou 12, **caractérisé en ce que** les étapes du thermoformage du tronçon partiel (15, 15') d'extrémité en un tronçon d'extrémité (7, 7') ayant subi un formage et du découpage du tronçon d'extrémité (7, 7') ayant subi un formage pour créer un orifice de passage (10, 10') sont réalisées dans un outil (14) mixte.

14. Procédé selon l'une quelconque des revendications 11 à 13, **caractérisé en ce que** la trempe du tronçon d'extrémité (7, 7') ayant subi un formage dans l'outil (14) mixte est refroidie notamment à l'aide de surfaces de contact refroidies de l'outil ou à l'aide d'un dispositif de refroidissement séparé.

15. Procédé selon l'une quelconque des revendications 11 à 14, **caractérisé en ce que** la fabrication du tube s'effectue via les étapes partielles :
- du roulage d'un feuillard d'acier
- du moulage du feuillard d'acier pour obtenir le corps tubulaire fendu et
- du soudage longitudinal du corps tubulaire fendu pour obtenir le tube fermé,
et **en ce que** le traitement thermique du tube s'effectue via les étapes partielles :
- de l'échauffement du tube à la température d'austénitisation,
- de la trempe du tube chauffé et
- du recuit du tube.
